# EUROPEAN PATENT APPLICATION

(11) **EP 2 928 150 A2**
(43) Date of publication of application: **07.10.2015**
(21) Application number: 15159745.7
(22) Date of filing: 18.03.2015
(51) Int. Cl.: H04L 29/06

(54) **MULTI-OBJECT INTEREST USING NETWORK NAMES**

(30) Priority: 31.03.2014 US 201414231572
(71) Applicant: Palo Alto Research Center Incorporated, Palo Alto, California 94304 (US)
(72) Inventor: Mosko, Marc E., Santa Cruz, CA 95060 (US); Solis, Ignacio, South San Francisco, CA 4080 (US)
(74) Representative: Lord, Michael

(57) **Abstract**

One embodiment provides a system that facilitates multi-object interest using network names. During operation, the system generates a first interest comprising a name of a content object of a remote node and a first window size. The name potentially represents a collection of objects at the remote node. The window size indicates a number of additional objects the system can accommodate. The node further obtains from a first response corresponding to the first interest a manifest of the collection of the remote node and from a second response corresponding to the first interest a first object listed in the manifest.

## Description

### BACKGROUND

### Field

This disclosure is generally related to object interests. More specifically, this disclosure is related to expressing an interest for multiple objects based on network names.

### Related Art

In many computing applications, it is often important for devices in a network to express interests for their respective collections of data. The proliferation of digital content creates a vast number of collections which require reconciliation. Content-Centric network (CCN) architectures have been designed to facilitate accessing such digital content. These networks include entities, or nodes, such as network clients, forwarders (e.g., routers and switches), and content producers, which communicate with each other by sending "interest" packets for various content items and receiving "response" packets comprising content objects in return. Unlike traditional Internet Protocol (IP) network, where an object is tied to its location and its IP address, the content objects in a CCN are identified based on a specific name, which is location independent.

For example, a border router that is connected to multiple areas of a computer network can subscribe to namespaces for those areas (e.g., "Area 1" and "Area 2"). Other routers that are not border routers may only subscribe to a single area. This way, a router that subscribes to the namespace "Area 1" only obtains network-configuration items for Area 1, and a router that subscribes to the namespace "Area 2" only obtains network-configuration items for Area 2. The border router that subscribes to both namespaces can obtain network-configuration items for Area 1 and Area 2.

Because a network-configuration item's structured name is unique and persistent, a node in a CCN can generate a hash value for each network-configuration item based on the structured name, without having to process the data for each content item. The node can also generate an additive hash for each routing-data collection, based on the hashes for the individual network-configuration items of a routing-data collection, so that the additive hash represents the contents of the routing-data collection. For example, the node can generate the additive hash by using an addition operation (or some other mathematical function) to process the hashes for the individual network-configuration items of the routing-data collection.

In a CCN, a node requests for an object using an interest based on the persistent name of the object. Any other node hosting the object sends back the object using a response. If a node sends a respective interest for a respective object, for a large collection of objects, the node needs repetitive dissemination of interests. Though CCN brings many desirable features to a network, some issues remain unsolved for obtaining multiple objects with efficient expression of interests.

### SUMMARY

One embodiment provides a system that facilitates multi-object interest using network names. During operation, the system generates a first interest comprising a name of a content object of a remote node and a first window size. The name potentially represents a collection of objects at the remote node. The window size indicates a number of additional objects the system can accommodate. The node further obtains from a first response corresponding to the first interest a manifest of the collection of the remote node and from a second response corresponding to the first interest a first object listed in the manifest.

In a variation on this embodiment, the manifest corresponds to an ordered list of names and hashes that identify the objects of the collection.

In a variation on this embodiment, a node forwarding the first interest reduces the first window size based on a network condition.

In a variation on this embodiment, the system obtains a second window size from the first response and creates Pending Interest Table (PIT) entries for the first objects in response to obtaining the manifest. The second window size indicates the number of PIT entries to be made.

In a further variation, the system evaluates a network condition at the current node and reduces the second window size before forwarding the first response.

In a further variation, the system, in response to reducing the second window size, marks a PIT entry for an object to be for a cache in the current node, and in response to identifying the object in a response, stores the object in the cache in the current node.

In a further variation, the system identifies an interest for the object stored in the cache in the current node and sends a second response corresponding to the interest. This second response comprises the object from the cache in the current node.

In a variation on this embodiment, the system generates a second interest comprising the manifest name, a hash of the manifest, an offset in the manifest, and a third window size. This offset indicates an order of an object listed in the manifest.

In a further variation, the system obtains a second window size from the first response, and generates the third window size based on a second window size.

In a further variation, a difference between the first and the second window sizes indicates a network condition at a remote node.

One embodiment provides a system that facilitates multi-object interest using network names. During operation, the system identifies in a first interest a name of a content object and a window size. The name potentially represents a collection of objects at a system. The window size indicates a number of additional objects transmittable in a pipeline. The system creates a first response corresponding to the first interest. The first response comprises a manifest of the collection of the system. In response to identifying a non-zero window size, the system creates a second response corresponding to the first interest. The second response comprises a first object listed in the manifest.

### BRIEF DESCRIPTION OF THE FIGURES

FIG. 1A illustrates an exemplary network facilitating Manifest-Based Content Networking (MBCN) in a Content-Centric Network (CCN), in accordance with an embodiment of the present invention.
FIG. 1B illustrates an exemplary format of a manifest of a collection of objects, in accordance with an embodiment of the present invention.
FIG. 2A illustrates an exemplary communication based on a multi-object interest in a CCN, in accordance with an embodiment of the present invention.
FIG. 2B illustrates an exemplary communication based on a multi-object interest in a CCN with a pipelined interest, in accordance with an embodiment of the present invention.
FIG. 2C illustrates an exemplary communication based on a multi-object interest in a CCN with in-network caching, in accordance with an embodiment of the present invention.
FIG. 3A presents a flowchart illustrating the process of a consumer node receiving a manifest and objects listed in the manifest based on a window size, in accordance with an embodiment of the present invention.
FIG. 3B presents a flowchart illustrating the process of a producer node sending a manifest and objects listed in the manifest based on a window size, in accordance with an embodiment of the present invention.
FIG. 3C presents a flowchart illustrating the process of an intermediate node forwarding a manifest and objects listed in the manifest based on a window size, in accordance with an embodiment of the present invention.
FIG. 4A presents a flowchart illustrating the process of a consumer node receiving objects listed in a manifest based on the manifest and a window size, in accordance with an embodiment of the present invention.
FIG. 4B presents a flowchart illustrating the process of a producer node sending objects listed in a manifest based on the manifest and a window size, in accordance with an embodiment of the present invention.
FIG. 4C presents a flowchart illustrating the process of an intermediate node forwarding objects listed in a manifest based on the manifest and a window size, in accordance with an embodiment of the present invention.
FIG. 5 illustrates an exemplary computer and communication system facilitating MBCN, in accordance with an embodiment of the present invention.

In the figures, like reference numerals refer to the same figure elements.

### DETAILED DESCRIPTION

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

### Overview

In embodiments of the present invention, the problem of efficiently expressing interest for multiple objects from a collection of objects is solved by incorporating a manifest and a receiving window in an interest packet from a node. The manifest represents a collection of objects at a remote node (e.g., lists the names of the objects in the collection). The size of the receiving window, which can be referred to as the window size, indicates up to how many additional objects (i.e., additional to the name specified in the interest) the node can accommodate (e.g., receive or forward).

With existing technologies, in a Content-Centric network (CCN), a node can obtain a content object (i.e., a new content item), or an object, at any time by broadcasting an interest packet comprising the persistent name of the object. This interest packet can be referred to as an interest. In this disclosure, the terms "content object" and "object" are used interchangeably. Dissemination of interests allows the node to obtain the desired object from any node in the CCN. For example, any host node of the object may receive the interest, identify the object based on the name in the interest, and determine that the local node hosts the object. In response, the host node can send a response packet comprising the object. This response packet can be referred to as a response. However, today's content objects (COs) are often grouped into a collection (e.g., a photo album of a social media account). For a large collection of objects, sending a respective interest for a respective object leads to inefficient, bandwidth-intensive, and repetitive dissemination of interests.

To solve this problem, embodiments of the present invention extend a CCN to incorporate Manifest-Based Content Networking (MBCN). A content consumer node in a CCN can express an interest for a collection of objects using a window size and the name of a manifest (can be referred to as the manifest name) representing the collection. The node sends an interest for the manifest and indicates the number of additional content objects the node can accommodate (e.g., receive) in the window size. As the interest moves through the network, each intermediate node checks local condition (e.g., congestion) and adjusts (e.g., reduce) the window based on the condition. A content publisher node sends a response comprising a manifest corresponding to the manifest name in the interest. In some embodiments, this manifest lists content objects in a collection (e.g., using the name or hash of the objects). It should be noted that a collection can comprise one or more other collections. In this disclosure, the terms "interest packet" and "interest" are used interchangeably. The terms "response packet" and "response" are also used interchangeably.

Unlike a typical CCN, in MBCN, the content producer node can additionally send up to the window size of additional objects listed in the manifest in the order of their appearance in the manifest. In some embodiments, the response indicates the window size in a packet header. As the response follows the reverse path to the consumer node (i.e., the path from the producer node to consumer node), the response satisfies its Pending Interest Table (PIT) entry at a respective intermediate node, and adds new PIT entries for the next window size of entries. The PIT indicates which objects a node is expecting to forward via the reverse path. In some embodiments, the PIT includes the name of the objects the node is expecting. A PIT entry is typically generated when a node forwards an interest. As respective responses comprising the additional objects follow the newly-created PIT entries, these responses satisfy their corresponding entries.

In some embodiments, the manifest is an ordered list identifying a collection of content objects. Each content object in a collection is identified by its name and corresponding digest, where the digest is the hash value of the content object. In some embodiments, each content object is also identified by a modified time which indicates the time that the content was modified. For the purposes of this description, the manifest is described as an ordered list, but other embodiments include the manifest structured as a synchronization tree, which contains content objects as well as nested collections of content objects. The system generates a root hash value for the manifest. The root hash value is an additive hash value based on the hash values of the individual content objects of the collection. The root hash value of the manifest is a unique identifier for the manifest.

In some embodiments, a content object in a collection is further identified by a corresponding modified time, which indicates the time the content object was modified. For each content object that is determined to be different, the local node determines whether the modified time of the content object in the remote manifest is more or less recent than the corresponding content object in the local manifest. If the remote content object corresponds to a modified time that is more recent, then the local node updates the value of the content object in the local manifest with the value of the content object from the remote manifest. A description of how to remove, or "white-out", a content item from a data collection is described in U.S. Patent Application No. 13/681,306, titled "Data Transport by Named Content Synchronization," by inventors Van L. Jacobson and Marc E. Mosko, filed 19 November 2012, the disclosure of which is incorporated by reference herein.

In some embodiments, the network clients, network nodes (e.g., forwarders such as routers), and publishers communicate over an information-centric network (ICN). In ICN, each piece of content is individually named, and each piece of data is bound to a unique name that distinguishes the data from any other piece of data, such as other versions of the same data or data from other sources. This unique name allows a network device to request the data by disseminating a request or an interest that indicates the unique name, and can obtain the data independent from the data's storage location, network location, application, and means of transportation. Named-data network (NDN) or a CCN are examples of ICN architecture; the following terms describe elements of an NDN or CCN architecture:
Content Object: A single piece of named data, which is bound to a unique name. Content Objects are "persistent," which means that a Content Object can move around within a computing device, or across different computing devices, but does not change. If any component of the Content Object changes, the entity that made the change creates a new Content Object that includes the updated content, and binds the new Content Object to a new unique name.
Unique Names: A name in an ICN is typically location independent and uniquely identifies a Content Object. A data-forwarding device can use the name or name prefix to forward a packet toward a network node that generates or stores the Content Object, regardless of a network address or physical location for the Content Object. In some embodiments, the name may be a hierarchically structured variable-length identifier (HSVLI). The HSVLI can be divided into several hierarchical components, which can be structured in various ways. For example, the individual name components parc, home, ndn, and test.txt can be structured in a left-oriented prefix-major fashion to form the name "/parc/home/ndn/test.txt." Thus, the name "/parc/home/ndn" can be a "parent" or "prefix" of "/parc/home/ndn/test.txt." Additional components can be used to distinguish between different versions of the content item, such as a collaborative document.

In some embodiments, the name can include a non-hierarchical identifier, such as a hash value that is derived from the content object's data (e.g., a checksum value) and/or from elements of the content object's name. A description of a hash-based name is described in U.S. Patent Application No. 13/847,814, titled "Ordered-Element Naming for Name-Based Packet Forwarding," by inventor Ignacio Solis, filed 20 March 2013, the disclosure of which is incorporated by reference herein. A name can also be a flat label. Hereinafter, "name" is used to refer to any name for a piece of data in a name-data network, such as a hierarchical name or name prefix, a flat name, a fixed-length name, an arbitrary-length name, or a label (e.g., a Multiprotocol Label Switching (MPLS) label).
Interest: A packet that indicates a request for a piece of data, and includes a name (or a name prefix) for the piece of data. A data consumer can disseminate a request or interest across an information-centric network, which CCN/NDN routers can propagate toward a storage device (e.g., a cache server) or a data producer that can provide the requested data to satisfy the request or interest.

In some embodiments, the ICN system can include a CCN architecture. However, the methods disclosed herein are also applicable to other ICN architectures as well. A description of a CCN architecture is described in U.S. Patent Application No. 12/338,175, titled "Controlling the Spread of Interests and Content in a Content Centric Network," by inventors Van L. Jacobson and Diana K. Smetters, filed 18 December 2008, the disclosure of which is incorporated by reference herein.

### Manifest-Based Content Networking

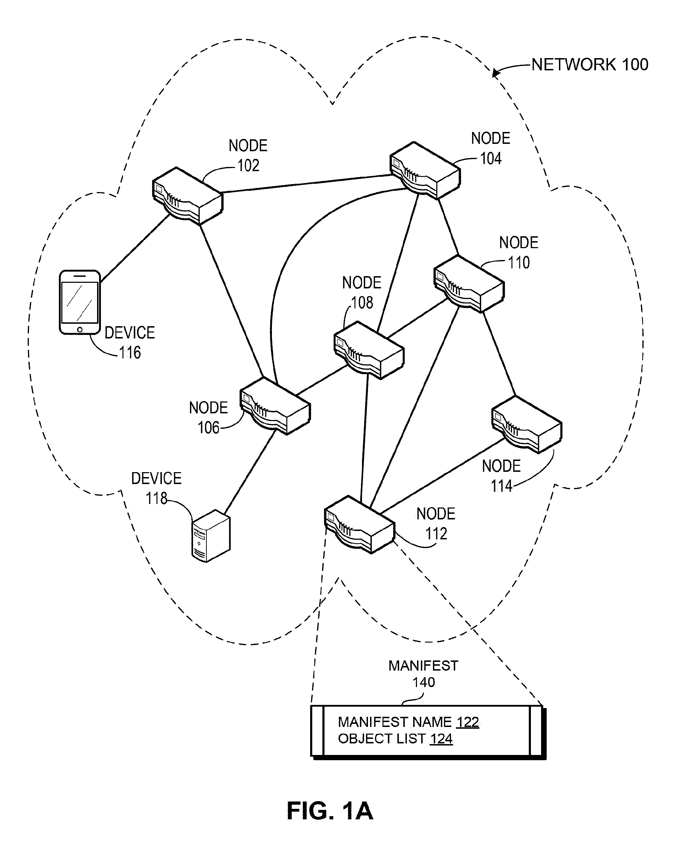

FIG. 1A illustrates an exemplary network facilitating MBCN in a CCN, in accordance with an embodiment of the present invention. Network 100, which can be a CCN, includes a client device 116, a content producing device 118, and a router or other forwarder at nodes 102, 104, 106, 108, 110, 112, and 114. Nodes 102-114 can contain one or more manifests. For example, node 112 contains a manifest 140. Manifest 140 comprises a collection name 122 and an ordered list of content objects 124. Any two nodes in a network can contain a manifest that represents the same collection of data, where the manifests can be synchronized using the methods described herein.

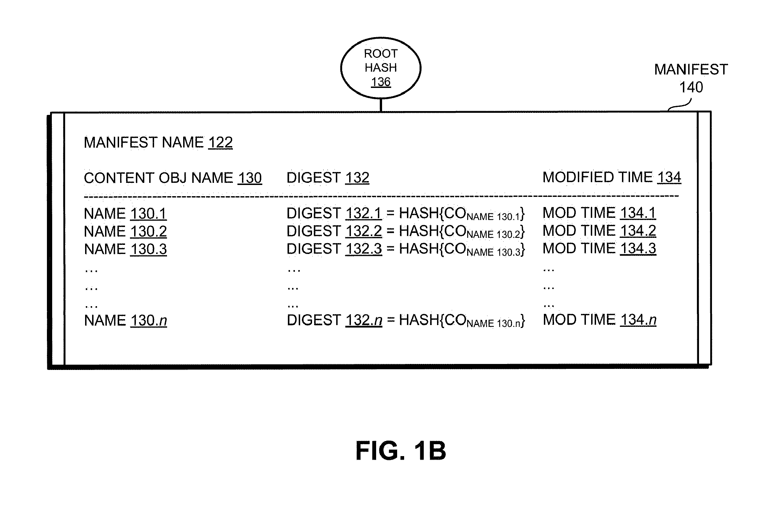

FIG. 1B illustrates an exemplary format of a manifest of a collection of objects, in accordance with an embodiment of the present invention. Manifest 140, as shown in FIG. 1A, comprises a collection name 122, which corresponds to the collection of objects manifest 140 represents. List of content objects 124 can include one or more content object name 130, digest 132, and modified time 134. In other words, manifest 140 is an ordered list of content objects identified by one or more of the following: a content object name 130.1-130.*n*; a digest 132.1-132.*n*; and a modified time 134.1-134.*n*. The digests 132.1-132.n comprise a hash value of the content object identified respectively by names 130.1-130.n. In some embodiments, the digest can be a SHA-256 hash of the content object, where the likelihood of a hash collision (where the one-way hash of two different content objects results in the same value) is sufficiently low such that the digest is a unique identifier for the content object.

Manifest 140 also includes a root hash 136, which is an additive hash value based on the hash values 132.1-132.n of the individual content objects of the collection. Root hash 136 of manifest 140 can act as a unique identifier for manifest 140. As described in conjunction with FIG.1A, manifest 140 can indicate a name and corresponding digest for each content object represented in the collection. Manifest 140 can also include a modified time for each content object represented in the collection. The use of the modified time field depends on the underlying application or service being performed.

In some embodiments, the window size in an interest is calculated based on a window-based flow control algorithm. For example, the window size can be determined based on a method similar to Transmission Control Protocol (TCP) Vegas, wherein an initial window size of 2 is used, and it is then adjusted based on the response time. In some embodiments, a node may not create a PIT entry for the manifest name on the reverse path of the manifest that the node would not otherwise create based on the forwarding table. For example, if manifest 140 lists object name 130.3, but at a given node (e.g., node 106) the forwarding table does not point to the prefix of name 130.3 along that path, node 106 may not create a PIT entry using name 130.3. This prevents off-path content injection attacks. In some embodiments, an initial interest for manifest 140 carries the publisher node's key. Furthermore, the response for the initial interest, which includes the manifest, carries the manifest's public key so that the intermediate nodes can verify the signature.

### Structure of Names

Communication based on manifests between two nodes is based on a three part name. The first part is a routable prefix that identifies the collection, such as "/a/b." The second part contains an identification of the relevant name space. For example, the second part can be "/adv" for advertisements or "/data" for data transfers. The third part is the hash value or content being advertised or transferred. Thus, a CCN name is of the form: /collection_prefix/adv_or_data/protocol_data.

An example of an interest sending a hash advertisement is: /a/b/adv/<roothash>. A local node receiving this advertisement and containing a local manifest with the same routing prefix "/a/b" retrieves the advertised manifest in chunks 0, 1,... up to the ending chunk number *m* based on a segmentation protocol. Based on the entries in the manifest, the node determines which content objects identified in the manifest are requested. In some embodiments, this is indicated by an offset of the manifest and the number of objects.

### Manifest-Based Communication Among Nodes

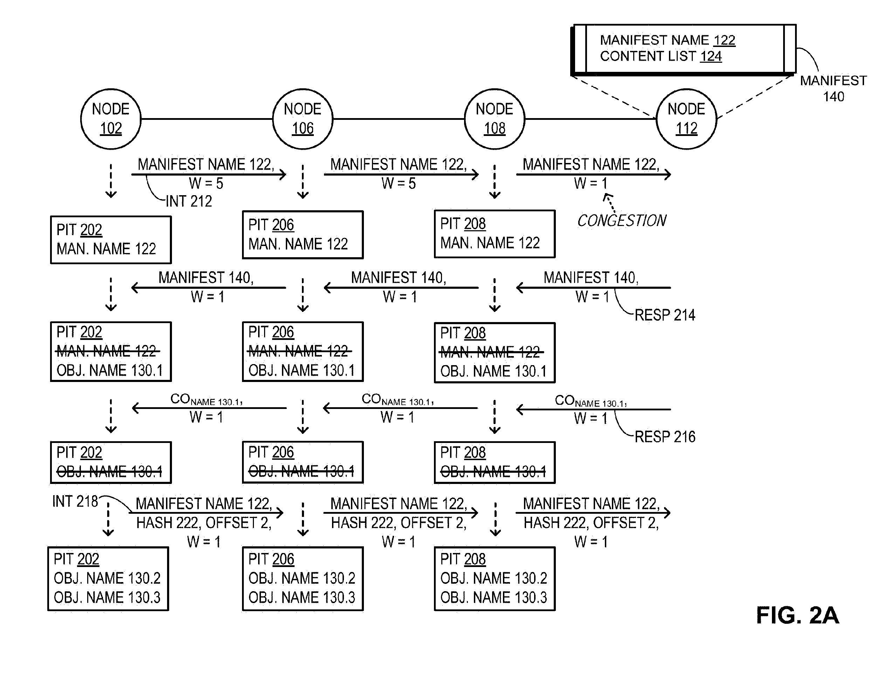

FIG. 2A illustrates an exemplary communication based on a multi-object interest in a CCN, in accordance with an embodiment of the present invention. During operation, consumer node 102 in CCN 100 expresses an initial interest 212 comprising a manifest name 122 associated with manifest 140 and a window size of 5 (as shown by "W=5"). This window size indicates that node 102 can accommodate up to 5 additional content objects. It should be noted that, the window size indicates up to how many additional objects other than the name specified in the interest the node can accommodate (e.g., receive). As interest 212 moves through the network from consumer node 102, and via intermediate nodes 206 and 208, a PIT entry is created for manifest name 122 in PITs 202, 206, and 208, respectively. In some embodiments, a respective node distinguishes between an interest with a manifest name and an interest with an object name.

Suppose that node 108 detects a local condition (e.g., a network congestion). In response, node 108 reduces the window size from 5 to 1. Here, the window size of 1 indicates that node 108 is going to forward back to node 102 the requested manifest 140 and one additional content object. Upon receiving interest 212, producer node 112 creates a response 214 comprising manifest 140. Furthermore, because the current window size is 1, node 112 includes the first content object with name 130.1 (denoted as CO_{NAME 130.1}) listed in manifest 140. When response 214 arrives, node 108 checks that response 214 comprises manifest 140. As a result, the existing PIT entry in PIT 208 for manifest name 122 is satisfied and removed (denoted by the strike-through text). Because response 214 includes a manifest (i.e., the content object of response 214 is of type "manifest") and the window size is 1, node 108 creates a new PIT entry in PIT 208 for CO_{NAME 130.1} using its name 130.1, which is the first entry in manifest 140.

Node 108 then forwards response 214 to node 106. When response 214 arrives, the existing PIT entry in PIT 206 for manifest name 122 is satisfied and removed (denoted by strike-through text). Because response 214 includes a manifest (i.e., the content object of response 214 is of type "manifest") and the window size is 1, node 106 creates a new PIT entry in PIT 206 for CO_{NAME 130.1} using its name 130.1. Node 106 then forwards response 214 to node 102. Once node 102 receives response 214 with manifest 140, the existing PIT entry in PIT 202 for manifest name 122 is satisfied and removed. In the same way, node 112 sends response 214 comprising for CO_{NAME 130.1} to node 108. Travelling through nodes 208, 206, and 202, response 214 satisfies the corresponding PIT entries with name 130.1 in PITs 208, 206, and 202, respectively.

Node 102 then expresses a subsequent interest 218 for next two objects in manifest 140. In interest 218, node 102 includes manifest name 122, a hash 222 of manifest 140, an offset 2 (considering the starting location/index of manifest 140 to be 1), and a window size of 1. Hash 222 in interest 218 allows node 112 to ensure that manifest 140 has not been updated at node 122. Offset 2 indicates that the second object in manifest 140 is requested by interest 218. Window size of 1 indicates that node 102 is going to accommodate (e.g., receive) up to 1 additional content object. As interest 218 moves through the network from consumer node 102, and via intermediate nodes 206 and 208, a PIT entry is created for the second object in manifest 140, CO_{NAME 130.2}, in PITs 202, 206, and 208, respectively. Because window size is one, another PIT entry is created for the third object in manifest 140, CO_{NAME 130.3}, in PITs 202, 206, and 208, respectively.

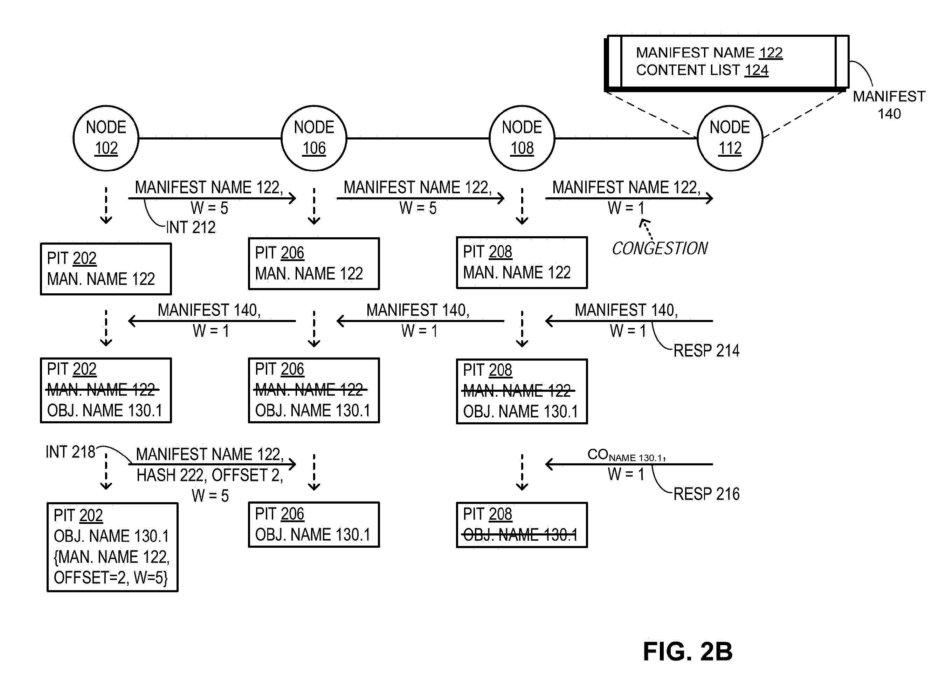

In some embodiments, a node can generate interests in a pipeline (i.e., before receiving the response corresponding to the previous interest). For example, node 102 can generate interest 218 before receiving response 216 corresponding to previous interest 212. FIG. 2B illustrates an exemplary communication based on a multi-object interest in a CCN with a pipelined interest, in accordance with an embodiment of the present invention. In this example, once node 102 receives response 214 with manifest 140 and window size of 1, node 102 can begin requesting more items from manifest 140 in a pipeline. In other words, node 102 can skip over the first entry of manifest 140 because node 102 is aware that CO_{NAME 130.1} is on its way. Hence, node 102 generates interest 218 for subsequent entries in manifest 140 using an offset of 2 (considering the starting location/index of manifest 140 to be 1), which indicates 2nd object in the manifest, and a window size of 5. In this example, because node 102 has not received response 216, PIT 202 includes entries for object name 130.1, as well as an entry comprising manifest name 122, offset 2, and window size 5. On the other hand, because node 108 has received response 216 with CO_{NAME 130.1}, PIT entry with name 130.1 has been satisfied.

In some embodiments, instead of sending an interest based on manifest name 122 along with an offset and a widow size, interest 218 can include request for the next individual object in manifest 140. For example, interest 218 can include an interest for CO_{NAME 130.2} (i.e., name 130.2). In that case, node 102 includes an entry comprising name 130.2 in PIT 202. Upon receiving the interest, node 112 sends a response comprising CO_{NAME 130.2}. When node 102 receives CO_{NAME 130.2}, it satisfies the PIT entry with name 130.2.

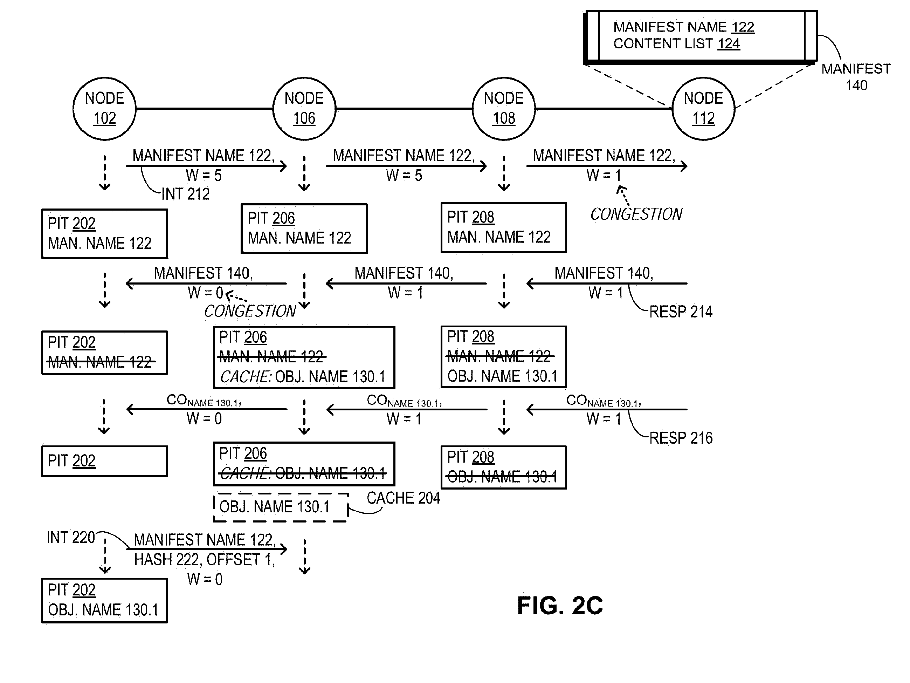

In some embodiments, if an intermediate node has already cached a referenced object from the manifest that is within the window size, the intermediate node can immediately send that object rather than waiting for the publisher node to send the content. FIG. 2C illustrates an exemplary communication based on a multi-object interest in a CCN with in-network caching, in accordance with an embodiment of the present invention. Suppose that, as response 214 comprising manifest 140 is forwarded to node 102, intermediate node 106 detects a local condition (e.g., a network congestion) and reduces the window size in the reverse path (i.e., the path from producer node 112 to consumer node 102). However, network 106 has maintained the window size in the forward path (i.e., the path from consumer node 102 to producer node 112). This can lead to a "tail drop" from the bottom of the window. For example, PIT 206 includes an entry with object name 130.1 and node 106 reduces the window size to 0. Node 106 then adjusts PIT 206 by dropping the entry because node 106 is not going to forward any additional object.

In some embodiments, when intermediate node 106 reduces the window size in a reverse path, node 106 creates a "cache" PIT entry for the dropped entries. A "cache" PIT entry indicates that when a response comprising the corresponding object is received, the node stores the object in a local cache. Because node 106 is aware that the object is coming from upstream (e.g., node 108), node 106 can cache the object without forwarding the object immediately to downstream. For example, when node 106 is under congestion in the reverse path and receives manifest 140 with window size 1, node 106 reduces the window size to 0. Node 106 adjusts the corresponding PIT by creating a "cache" PIT entry with object name 130.1. Consequently, node 106 can receive CO_{NAME 130.1}, satisfy the "cache" PIT entry, and store CO_{NAME 130.1} in a local cache 204 without forwarding the object along a congested link to node 102. When node 102 receives response 214 comprising manifest 140 and window size 0, node 102 also drops the entry with name 130.1 from PIT 202 and expresses an interest 220 for the first two objects in manifest 140.

In interest 220, node 102 includes manifest name 122, a hash 222 of manifest 122, an offset 1, and a window size of 0. Hash 222 in interest 220 allows node 112 to ensure that manifest 140 has not been updated at node 122. Offset 1 indicates that the first object in manifest 140 is requested by interest 220. Window size of 0 indicates that node 102 is not going to accommodate any additional content objects. As interest 220 leaves consumer node 102, a PIT entry is created for the first object in manifest 140 with name 130.1 in PITs 202. However, because this object is cached in cache 204 of node 106, node 106 forwards CO_{NAME 130.1} to node 102. Receiving CO_{NAME 130.1} satisfies the corresponding PIT entry in PIT 202.

### Operations Associated with Initial Interest

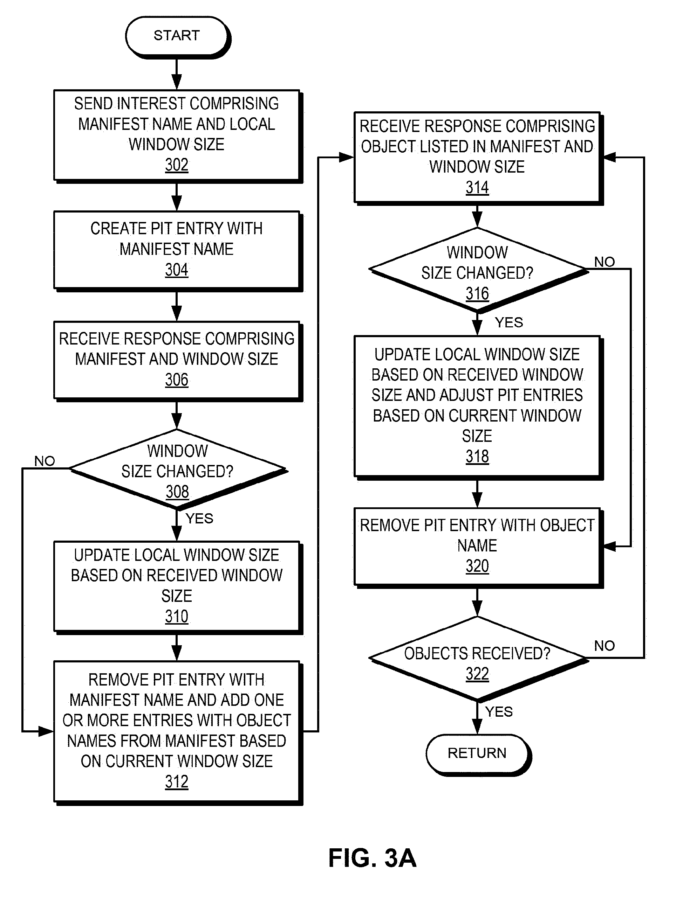

FIG. 3A presents a flowchart illustrating the process of a consumer node receiving a manifest and objects listed in the manifest based on a window size, in accordance with an embodiment of the present invention. During operation, the node sends an interest comprising a manifest name and a local window size (operation 302), and creates a PIT entry with the manifest name (operation 304). The local window size is determined by the node. The node then receives a response comprising the manifest and a window size (operation 306). The node checks, for the initial interest, whether the window size has changed (operation 308) compared to the local window size. If the window size has changed, the node updates the local window size based on received window size (operation 310), as described in conjunction with FIG. 2A.

If the window size has not changed (operation 308) or the local window size has been updated (operation 310), the node removes the PIT entry with manifest name and adds one or more entries with object names from manifest based on current window size (operation 312), as described in conjunction with FIG. 2A. The node then receives a response comprising the object listed in manifest and window size (operation 314) and checks, for the subsequent objects, whether the window size has changed (operation 316) compared to the local window size. If the window size has changed, the node updates the local window size based on the received window size and adjusts PIT entries based on the current window size (operation 318). The node then removes the PIT entry with object (operation 320) and checks whether the objects for which the interest has been expressed been received (operation 322). If not, the node continues to receive the next response comprising an object listed in manifest and a window size (operation 314).

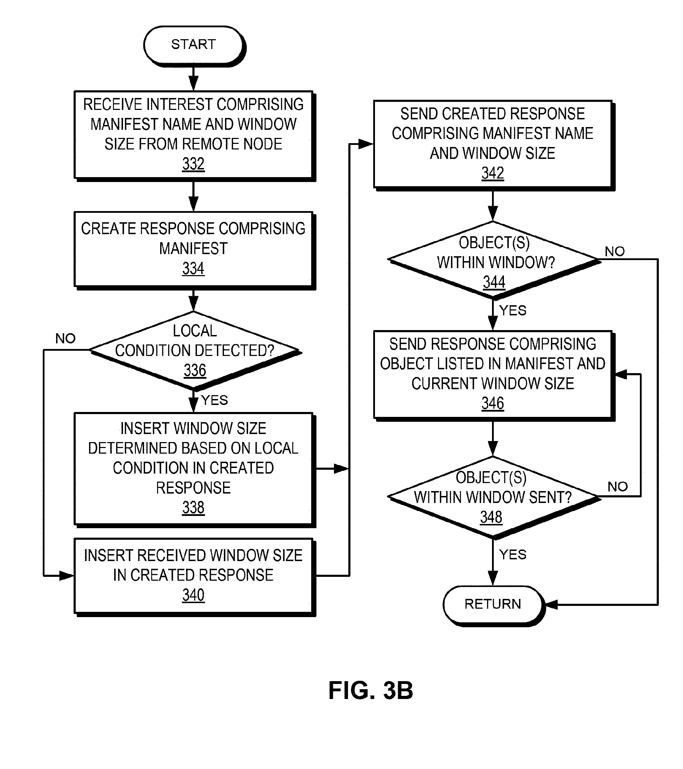

FIG. 3B presents a flowchart illustrating the process of a producer node sending a manifest and objects listed in the manifest based on a window size, in accordance with an embodiment of the present invention. During operation, the node receives an interest comprising a manifest name and a window size from a remote note (operation 332). In the example in FIG. 2A, if node 112 is the producer node, node 108 can be the remote node. The node creates a response comprising the manifest (operation 334) and checks whether the node has detected a local condition (operation 336). Examples of a local condition include, but are not limited to, a network congestion, a link failure, and a node failure. If the node has detected a local condition, the node inserts a window size determined based on the local condition in the created response (operation 338), as described in conjunction with FIG. 2A. If the node has not detected a local condition, the node inserts the received window size in the created response (operation 340).

After inserting the window size (operation 338 or 340), the node sends the created response comprising the manifest name and a window size (operation 342). This response can travel in a CCN based on the manifest name to the corresponding consumer node. The node checks whether there are object(s) within the window (operation 344). If so, the node sends a response comprising an object listed in the manifest and the current window size (operation 346), and checks whether the object(s) within the window have been sent (operation 348). If the object(s) within the window have not been sent, the node continues to send the next response comprising the next object listed in the manifest and the current window size (operation 346).

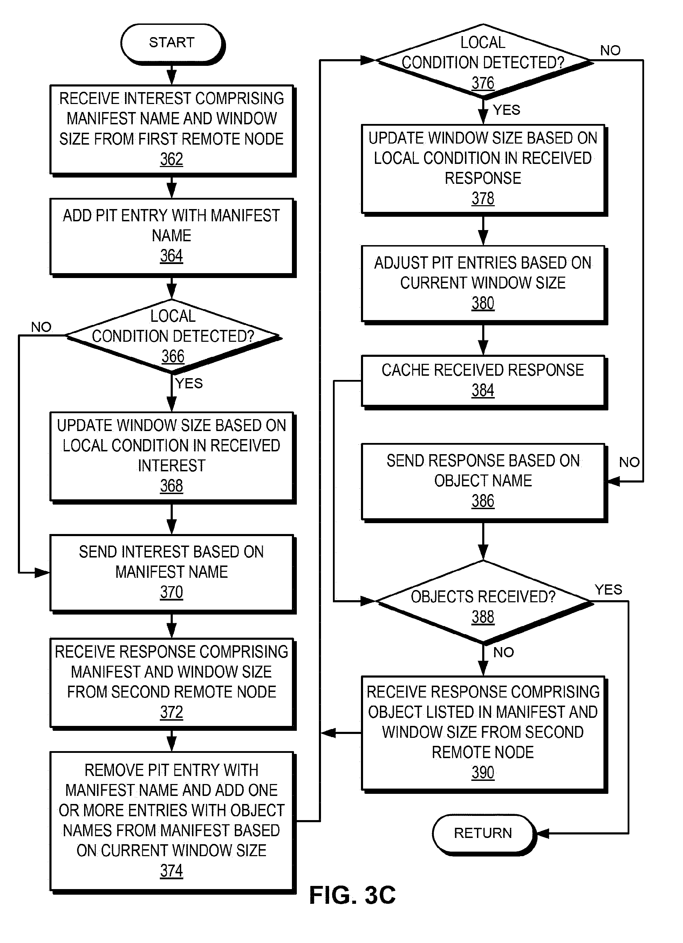

FIG. 3C presents a flowchart illustrating the process of an intermediate node forwarding a manifest and objects listed in the manifest based on a window size, in accordance with an embodiment of the present invention. During operation, the node receives an interest comprising a manifest name and a window size from a first remote note (operation 362). In the example in FIG. 2A, if node 108 is the intermediate node, node 106 can be the first remote node. The node then adds a PIT entry with the manifest name (operation 364) and checks, for the forward path, whether the node has detected a local condition (operation 366). If the node has detected a local condition, the node updates the window size based on the local condition in the received interest (operation 368). If the node has not detected a local condition (operation 366) or has updated the window size (operation 368), the node sends the interest based on the manifest name (operation 370).

The node then receives a response comprising the manifest and a window size from a second remote node (operation 372). In the example in FIG. 2A, if node 108 is the intermediate node, node 112 can be the second remote node. The node then removes the PIT entry with the manifest name and adds one or more entries with object names from manifest based on the current window size (operation 374). The node checks, for the reverse path, whether the node has detected a local condition (operation 376). If the node has detected a local condition, the node updates the window size based on the local condition in the received response (operation 378). The node also adjusts PIT entries based on the current window size (operation 380), as described in conjunction with FIG. 2C.

In some embodiments, the node caches the received response (operation 384). It should be noted that the node sends the cached response in response to receiving an interest for the object in the response from the first remote node. If the node has not detected a local condition, the node sends the response based on the object name (operation 386). After the node has cached (operation 384) or sent (operation 386) the response, the node checks whether the objects for which the interest has been expressed been received (operation 388). If not, the node continues to receive the next response comprising the next object listed in manifest and a window size from the second remote node (operation 390) and check whether the node has detected a local condition (operation 376). It should be noted that a respective node determines the current window size for an outgoing interest or response based on the received window size and the current network condition. Examples of a network condition include, but are not limited to, previous network conditions, bandwidth, storage availability, processing power availability, latency, jitter, number of hops, administrative boundaries, administrative policies, loss rate, node reliability, network type, layer-2 condition, application preference, and cost.

### Operations Associated with Subsequent Interest

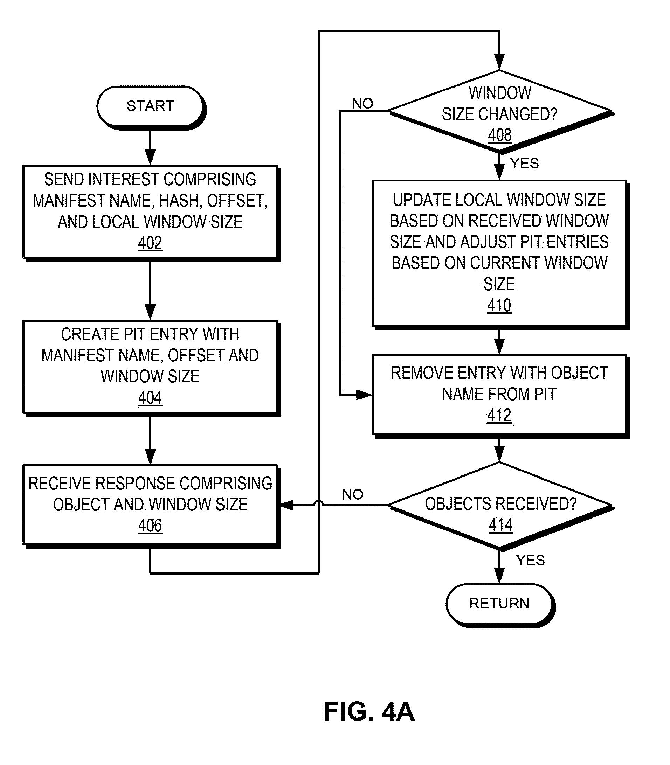

FIG. 4A presents a flowchart illustrating the process of a consumer node receiving objects listed in a manifest based on the manifest and a window size, in accordance with an embodiment of the present invention. During operation, the node sends an interest comprising a manifest name, a hash computation of the manifest, an offset, and a local window size (operation 402), and creates a PIT entry with the manifest name, offset, and window size (operation 404), as described in conjunction with FIG. 2B. The local window size is determined by the node. This window size may not be a reduced window size in a response received from an intermediate node. The node then receives a response comprising an object of interest and a window size (operation 406).

The node checks whether the window size has changed (operation 408) compared to the local window size. If the window size has changed, the node updates the local window size based on received window size and adjusts PIT entries based on the current window size (operation 410), as described in conjunction with FIG. 2A. If the window size has not changed, the node removes the PIT entry with object name (operation 412) and checks whether the objects for which the interest has been expressed been received (operation 414). If not, the node continues to receive the next response comprising the next object listed in the manifest and a window size (operation 406).

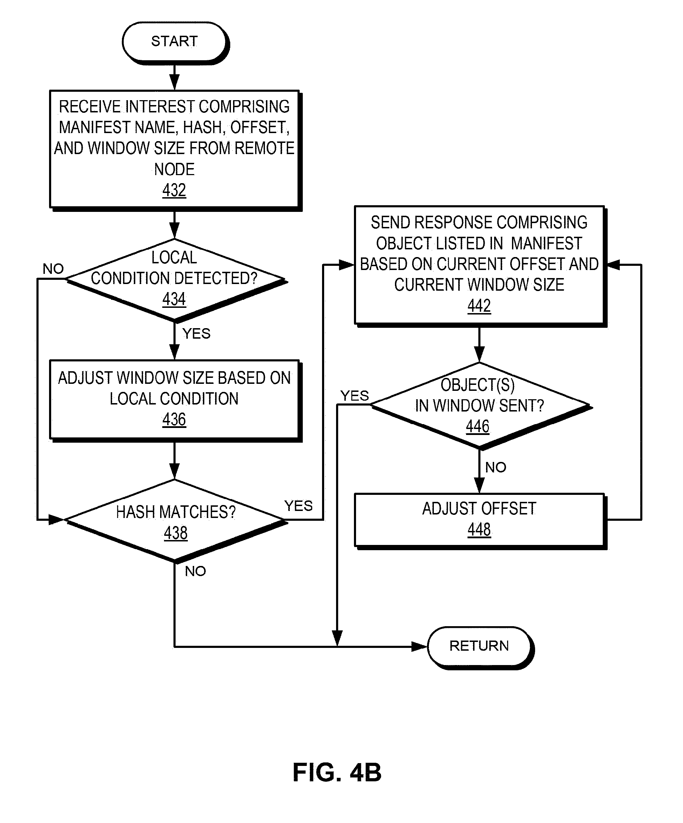

FIG. 4B presents a flowchart illustrating the process of a producer node sending objects listed in a manifest based on the manifest and a window size, in accordance with an embodiment of the present invention. During operation, the node receives an interest comprising a manifest name, a hash computation of the manifest, which can be computed at a remote node, an offset, and a local window size from the remote note (operation 432). In the example in FIG. 2A, if node 112 is the producer node, node 108 can be the remote node. The node checks whether the node has detected a local condition (operation 434). If the node has detected a local condition, the node adjusts window size based on the local condition (operation 436). If the node has not detected a local condition (operation 434) or has adjusted the window size (operation 436), the node checks whether the received hash matches the hash of the local manifest (operation 438).

If the hash matches, the local manifest has not been updated. The node then sends a response comprising an object listed in the manifest based on the current offset and the current window size (operation 442). The node checks whether the object(s) within the window have been sent (operation 446). If the object(s) within the window have not been sent, the node adjusts the offset (operation 448) and continues to send a response comprising the next object listed in the manifest based on the current offset and the current window size (operation 442). For example, if the offset is 2 and the window size is 1, the node sends a response comprising the second object listed in the manifest, adjusts the offset to be 3, and sends another response comprising the third object listed in the manifest.

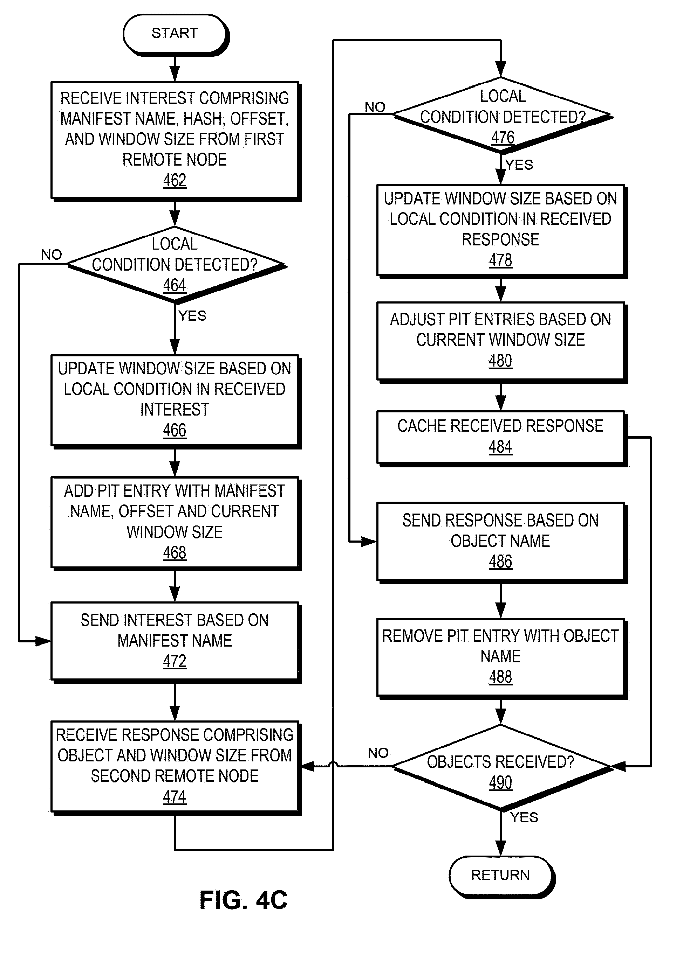

FIG. 4C presents a flowchart illustrating the process of an intermediate node forwarding objects listed in a manifest based on the manifest and a window size, in accordance with an embodiment of the present invention. During operation, the node receives an interest comprising a manifest name, a hash computation of the manifest, an offset, a manifest name and a local window size from a first remote note (operation 462). In the example in FIG. 2A, if node 108 is the intermediate node, node 106 can be the first remote node. The node checks, for the forward path, whether the node has detected a local condition (operation 464). If the node has detected a local condition, the node updates the window size based on the local condition in the received interest (operation 466) and then adds a PIT entry with the manifest name, offset, and current window size (operation 468). If the node has not detected a local condition (operation 464) or has added the PIT entry (operation 468), the node sends the interest based on the manifest name (operation 472). It should be noted that the subsequent interests also include the manifest name, which is used to route the interest in the CCN.

The node then receives a response comprising an object and a window size from a second remote node (operation 474). In the example in FIG. 2A, if node 108 is the intermediate node, node 112 can be the second remote node. The node then checks, for the reverse path, whether the node has detected a local condition (operation 476). If the node has detected a local condition, the node updates the window size based on the local condition in the received response (operation 478). The node also adjusts PIT entries based on the current window size (operation 380), as described in conjunction with FIG. 2C. In some embodiments, the node caches the received response (operation 484). It should be noted that the node sends the cached response upon receiving an interest for the object from the first remote node.

If the node has not detected a local condition, the node sends the response based on the object name (operation 486) and removes the PIT entry with the object name (operation 488). After the node has cached the response (operation 484) or removed the PIT entry with the object name (operation 488), the node checks whether the objects for which the interest has been expressed been received (operation 490). If not, the node continues to receive the next response comprising the next object listed in manifest and a window size from the second remote node (operation 474) and check whether the node has detected a local condition (operation 476). It should be noted that a respective node determines the current window size for an outgoing interest or response based on the received window size and the current network condition. Examples of a network condition include, but are not limited to, previous network conditions, bandwidth, storage availability, processing power availability, latency, jitter, number of hops, administrative boundaries, administrative policies, loss rate, node reliability, network type, layer-2 condition, application preference, and cost.

### Apparatus and Computer System

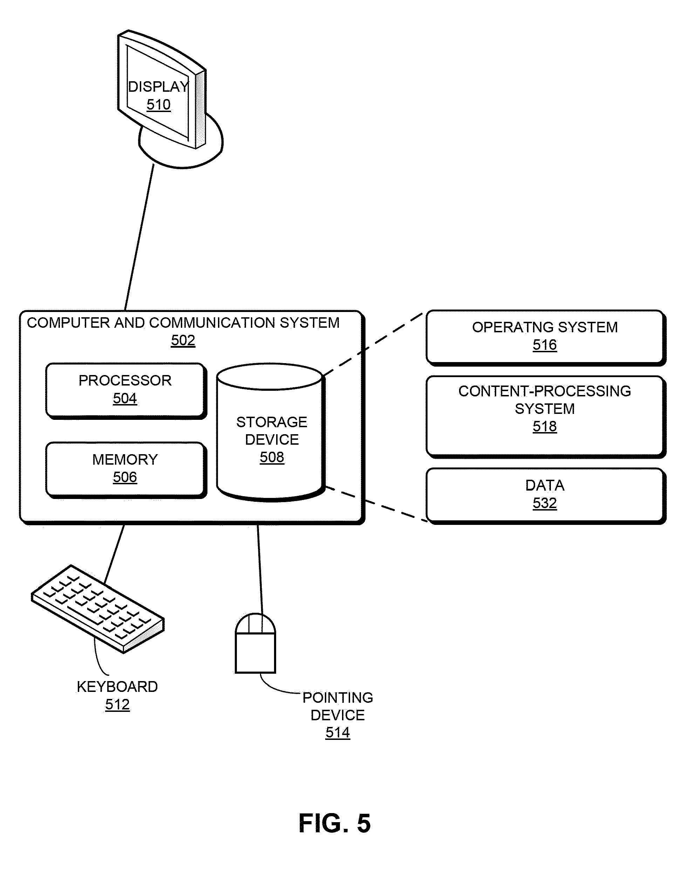

FIG. 5 illustrates an exemplary computer and communication system facilitating MBCN, in accordance with an embodiment of the present invention. Computer and communication system 502 includes a processor 504, a memory 506, and a storage device 508. Memory 506 can include a volatile memory (e.g., RAM) that serves as a managed memory, and can be used to store one or more memory pools. Furthermore, computer and communication system 502 can be coupled to a display device 510, a keyboard 512, and a pointing device 514. Storage device 508 can store an operating system 516, a content-processing system 518, and data 532.

Content-processing system 518 can include instructions, which when executed by computer and communication system 502, can cause computer and communication system 502 to perform methods and/or processes described in this disclosure. Specifically, content-processing system 518 can facilitate MBCN in a CCN. In some embodiments, content-processing system 518 can be executed on a plurality of computer and communication systems, which are able to exchange data that describes the state of the operation associated with content-processing system 518.

In summary, embodiments of the present invention provide a computer system and a method that facilitates multi-object interest using network names. During operation, the system generates a first interest comprising a name of a content object of a remote node and a first window size. The name potentially represents a collection of objects at the remote node. The window size indicates a number of additional objects the system can accommodate. The node further obtains from a first response corresponding to the first interest a manifest of the collection of the remote node and from a second response corresponding to the first interest a first object listed in the manifest

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, the methods and processes described above can be included in hardware modules or apparatus. The hardware modules or apparatus can include, but are not limited to, application-specific integrated circuit (ASIC) chips, field-programmable gate arrays (FPGAs), dedicated or shared processors that execute a particular software module or a piece of code at a particular time, and other programmable-logic devices now known or later developed. When the hardware modules or apparatus are activated, they perform the methods and processes included within them.

The foregoing descriptions of embodiments of the present invention have been presented for purposes of illustration and description only. They are not intended to be exhaustive or to limit the present invention to the forms disclosed. Accordingly, many modifications and variations will be apparent to practitioners skilled in the art. Additionally, the above disclosure is not intended to limit the present invention. The scope of the present invention is defined by the appended claims.

## Claims

1. A non-transitory computer-readable storage medium storing instructions that when executed by a computer cause the computer to perform a method, the method comprising:
generating a first interest comprising a name of a content object of a remote node and a first window size, wherein the name potentially represents a collection of objects at the remote node, and wherein the window size indicates a number of additional objects the computer can accommodate;
obtaining from a first response corresponding to the first interest a manifest of the collection of the remote node; and
obtaining from a second response corresponding to the first interest a first object listed in the manifest.

2. The non-transitory computer-readable storage medium of claim 1, wherein the manifest corresponds to an ordered list of names and hashes that identify the objects of the collection.

3. The non-transitory computer-readable storage medium of claim 1, wherein a node forwarding the first interest reduces the first window size based on a network condition.

4. The non-transitory computer-readable storage medium of claim 1, wherein the method further comprises:
obtaining a second window size from the first response; and
creating Pending Interest Table (PIT) entries for objects in responses,
wherein the second window size indicates the number of PIT entries to be made.

5. The non-transitory computer-readable storage medium of claim 4, wherein the method further comprises evaluating a network condition at the current node and reducing the second window size before forwarding the first response.

6. The non-transitory computer-readable storage medium of claim 5, wherein the method further comprises:
in response to reducing the second window size, marking a PIT entry for an object to be for a cache in the current node; and
in response to identifying the object in a response, storing the object in the cache in the current node.

7. The non-transitory computer-readable storage medium of claim 6, wherein the method further comprises:
identifying an interest for the object stored in the cache in the current node;
sending a second response corresponding to the interest; wherein the second response comprises the object from the cache in the current node.

8. The non-transitory computer-readable storage medium of claim 1, wherein the method further comprises generating a second interest comprising the manifest name, a hash of the manifest, an offset in the manifest, and a third window size, wherein the offset indicates an order of an object listed in the manifest.

9. The non-transitory computer-readable storage medium of claim 8, wherein the method further comprises:
obtaining a second window size from the first response; and
generating the third window size based on a second window size.

10. A non-transitory computer-readable storage medium storing instructions that when executed by a computer cause the computer to perform a method, the method comprising:
identifying in a first interest a name of a content object and a window size, wherein the name potentially represents a collection of objects at a local node, and wherein the window size indicates a number of additional objects transmittable in a pipeline;
creating a first response corresponding to the first interest, wherein the first response comprises a manifest of the collection of the local node; and
in response to identifying a non-zero window size, creating a second response corresponding to the first interest, wherein the second response comprises a first object listed in the manifest.
